# EUROPÄISCHE PATENTSCHRIFT

(11) **EP 0 426 881 B1**
(45) Veröffentlichungstag und Bekanntmachung des Hinweises auf die Patenterteilung: **08.03.1995**
(21) Anmeldenummer: 89120416.6
(22) Anmeldetag: 04.11.1989
(51) Int. Cl.: G01S 13/34, G01S 7/35

(54) **Radarempfänger**
Radar receiver
Récepteur radar

(43) Veröffentlichungstag der Anmeldung: 15.05.1991
(73) Patentinhaber: DIEHL GMBH & CO., 90478 Nürnberg (DE)
(72) Erfinder: Schuster, Manfred, Dr., D-8501 Eckental (DE)

(56) Entgegenhaltungen:
- DE-A- 3 243 825
- DE-A- 3 837 348
- US-A- 4 733 239
- MERRILL SKOLNIK 'Radar Handbook'1970 , MCGRAW HILL , NEW YORK ,NY , USA Altimeters
- MERRILL SKOLNIK 'Introduction to Radar Systems' 1980 , MCGRAW HILL , SINGAPORE$ FM CW Altimeter

## Beschreibung

Die Erfindung betrifft einen Radarempfänger gemäß dem Oberbegriff des Anspruches 1.

Ein solcher Radarempfänger ist aus der US-A 4,733,239 als Empfangsteil eines Radar-Höhenmessers auf Basis eines frequenzmodulierten Dauerstrich-Radargerätes bekannt. Der Empfangskanal steuert die Ermittlung und Anzeige der aktuellen Höheninformation über eine Schwellwertstufe hinter dem Glättungsfilter eines Detektors. Vor dem Detektor ist ein als Hochpass beschalteter Zwischenfrequenzverstärker angeordnet, um über den linearen Anfangsbereich der Filterkennlinie die Höhenabhängigkeit des Radardechos vom Grund zu kompensieren. Diese beträgt 6 dB/Oktave, wie unter Bezugnahme auf die Radargleichungen im Kapitel "FM-CW altimeter" auf Seiten 84 ff des Buches "Introduction to Radar Systems" vom M. Skolonik (1980, McGraw Hill, Singapore) näher ausgeführt. Dort ist auch darauf hingewiesen, daß im Gegensatz zur Flächenreflexion das Radarecho von einem Punktziel eine Höhenabhängigkeit von 12 dB/Oktave (was einem Hochpass zweiter Ordnung entspricht) aufweist. Dort wird deshalb empfohlen, die Höhenabhängigkeit der Radarechos mit einem Filter zu kompensieren, das zwischen diesen beiden Werten angesiedelt ist, also mit einem Filter für etwa 9 dB/Oktave. Da die Leistung des auf Reflexion an einem Punktziel zurückgehenden Empfangssignales aber umgekehrt proportional ist zur vierten Potenz des Abstands zwischen Sende-Empfangs-Antenne und Punktziel, resultiert daraus immer noch eine recht große Dynamik des Empfangssignales in Abhängigkeit von Schwankungen des Radar-Abstandes zum Punktziel. Diese Dynamik läßt sich mit einem einzigen Demodulations-Gleichrichter in der Regel noch nicht beherrschen, weil entweder kleine Signale unterhalb der Kennlinienschwelle liegen oder große Eingangssignale den Gleichrichter in die Sättigung aussteuern - weil also in beiden Fällen die Eingangsschwankungen nicht zu einem repräsentativen Ausgangssignal führen, das zur Digitalisierung für eine anschließende Signalanalyse geeignet wäre. Der denkbare Ausweg, je einen Gleichrichter für kleine bis mittlere und für mittlere bis große Anregungen parallel zu betreiben, ist schaltungstechnisch sehr aufwendig und insbesondere in der Kennlinienanpassung beim Übergang von kleinen auf große Anregungen kritisch.

Man könnte auch daran denken, die Empfangssignal-Dynamik durch Einsatz eines Kompanders im Empfangskanal zu reduzieren, also etwa durch Einsatz eines logarythmischen Verstärkers (vgl. U. Tietze/Ch. Schenk "Halbleiter-Schaltungstechnik" Seiten 206/207 der fünften Auflage) oder durch Realisierung einer Kompander-Kennlinie mittels einer Dioden-Serienschaltung. Ein frequenzabhängig arbeitender logarythmischer Verstärker ist aber schaltungstechnisch sehr aufwendig. Die Realisierung einer Kompander-Kennlinie aus realen Dioden-Kennlinien führt zu Auslegungsproblemen wegen der nicht-linearen (Modulations-)Effekte, mit dem Erfordernis, die daraus resultierenden höheren harmonischen vor der weiteren Verarbeitung gesondert wieder heraussieben zu müssen. Vor allem aber läßt sich zeigen, daß der Einsatz solcher Kompander-Schaltungen die Antenneneigenschaften der Radarantenne verschlechtert, weil die Nebenzipfel-Dämpfung sehr viel geringer wird, und außerdem die Richtwirkung der Radarantenne beeinträchtigt, weil die Breite der Hauptkeule sehr stark vergrößert wird; was beides im Interesse eindeutiger Punktziel-Detektion in Clutter-Umgebung unerwünscht ist.

In Erkenntnis dieser Gegebenheiten liegt der Erfindung die Aufgabe zugrunde, die Dynamik im Radar-Empfangskanal eines frequenzmodulierten Dauerstrich-Radar zu reduzieren, ohne dadurch die Richtcharakteristik der Radarantenne wesentlich zu beeinträchtigen oder auch nur größeren Schaltungs-Aufwand zur Kompensation ungewünschter nicht-linearer Effekte zu benötigen.

Diese Aufgabe ist erfindungsgemäß im wesentlichen dadurch gelöst, daß der Radarempfänger gemäß dem Kennzeichnungsteil des Anspruches 1 ausgelegt ist.

Nach dieser Lösung ist die R-Exponent-Vier-Abhängigkeit des Empfangssignales vom Abstand zwischen Antenne und Punktziel aufgehoben, indem zwei Filter mit im Betriebsbereich über der Frequenz quadratischer Leistungscharakteristik im Empfangskanal vor der Demodulator-Gleichrichtung bzw. vor der Analog-Digital-Quantisierung vorgesehen werden. Ein solches R-Quadrat-Filter ist besonders einfach als Schaltun eines Hochpasses erster Ordnung realisierbar, der nur im linearen Anfangsbereich seiner Kennlinie ausgesteuert wird, so daß die Ausgangsamplitude von der Eingangsamplitude linear über der Signalfrequenz abhängt, was einer quadratischen Abhängigkeit der (für die Radargleichungen maßgeblichen) Empfangssignalleistungen über der Empfangsfrequenz entspricht.

Die Realisierung als Reihenschaltung zweier einfacher Hochpaßfilter erster Ordnung weist darüberhinaus den Vorteil auf, ohne Zusatzaufwand eine einfache Dynamikkompression auch der auf die Clutterleistung zurückzuführenden Empfangssignale zu ermöglichen, indem ein für Radar-Frequenzauswertung Clutterkanal zwischen beiden R-Quadrat-Filtern abgegriffen wird. Dadurch wird die an sich im Clutterkanal enthaltene R-Quadrat-Abhängigkeit kompensiert (linearisiert), die dadurch gegeben ist, daß bei etwa rechtwinkeligem Erfassen eines großflächigen Clutter-Zielgebietes die Empfangssignalleistung in guter Näherung umgekehrt proportional ist zum Quadrat über dem Abstand zwischen der Radar-Sende-EmpfangsAntenne und dem Clutter-Zielgebiet (a.a.O Kap. 13.2 Gleichung 13.9).

Zusätzliche Alternativen und Weiterbildungen sowie weiterer Merkmale und Vorteile der Erfindung ergeben sich aus den weiteren Ansprüchen und, auch unter Berücksichtigung der Darlegungen in der Zusammenfassung, aus nachstehender Beschreibung eines in der Zeichnung unter Beschränkung auf das Wesentliche als einpoliges Blockschaltbild stark abstrahiert skizzierten bevorzugten Realisierungsbeispiels zur erfindungsgemäßen Lösung. Es zeigt:
- Fig. 1: zwei um Entfernungsabhängigkeiten bereinigte Radar-Empfangskanäle
**und**
- Fig. 2: den Aussteuerbereich eines Hochpasses als R²-Filter.

Ein Radargerät 11 weist im wesentlichen einen eine Antenne 12 speisenden Sender 13 und wenigstens einen Empfangskanal 14 auf, der einen Quantisierer 15 zum Umsetzen der analogen Radar-Empfangsinformation in eine kodierte Digitalinformation speist. Gewöhnlich sind der Sender 13 und der Empfangskanal 14 über einen Duplexer 16 an eine gemeinsame Sende-Empfangs-Antenne 12 angeschlossen. Ein empfangsseitiger Vorverstärker 17 speist den Empfangskanal 14 mit einer Amplituden- und Frequenz-Information nach Maßgabe der vom Sender 13 abgestrahlten und in einigem Abstand vor der Antenne 12 reflektierten Energie.

Wie aus den Radargleichungen bekannt, liefert die Reflexion der Sendeenergie 18 an einem Punktziel 19 ein Empfangssignal 20 mit einer Signalleistung, die dem vierten Exponenten des Abstands R zwischen Antenne 12 und Punktziel 19 umgekehrt proportional ist. Daraus resultiert eine beträchtliche Schankung des Energieinhalts (also der Amplitude) des Empfangssignales 20 in Abhängigkeit vom Ziel-Abstand R. Wenn in einem Radarbetrags-Empfangskanal 14′ zur Gewinnung der Signatur eines Punktzieles 19 das Empfangssignal 20 mit einem Gleichrichter 21 demoduliert und gegebenenfalls in einem nachfolgenden Tiefpaß 22 geglättet wird, resultiert aus der großen Amplituden-Dynamik des vom Punktziel 19 herrührenden Empfangssignales 20, daß die Demodulation zu großen Fehlern führt. Denn entweder wird ein Gleichrichter 21 eingesetzt, dessen Kennlinie die Aussteuerun mit großer Amplitude zuläßt; wobei jedoch ein solcher Gleichrichter aufgrund entsprechend großer Schwellenspannung bei Aussteuerung mit kleinen Amplituden kein Ausgangssignal liefert. Oder es wird ein Gleichrichter mit kleiner Schwellenspanung eingesetzt, um auch kleine Amplituden-Schwankungen in dem Empfangssignal 20 demodulieren zu können; mit der Folge, daß dieser Gleichrichter bei großen Eingangsampliutuden in die Kennlinien-Sättigung übersteuert wird, also unterschiedliche Amplituden großen Hubes ausgangsseitig nicht mehr voneinander unterschieden werden können.

Für eine Analog-Digital-Umsetzung in einem Quantisierer 15 weisen große Pegelschwankungen des Empfangssignales 20 den Nachteil auf, bei hinreichender Auflösung auch kleiner Amplitudenschwankungen für den gesamten Amplitudenhub ausgangsseitig eine große Bit-Breite zu erfordern, also teure und relativ langsame Wandler und aufwendige Schnittstellenschaltungen zur Verarbeitung deren großer Anzahl an Ausgangskanälen einsetzen zu müssen.

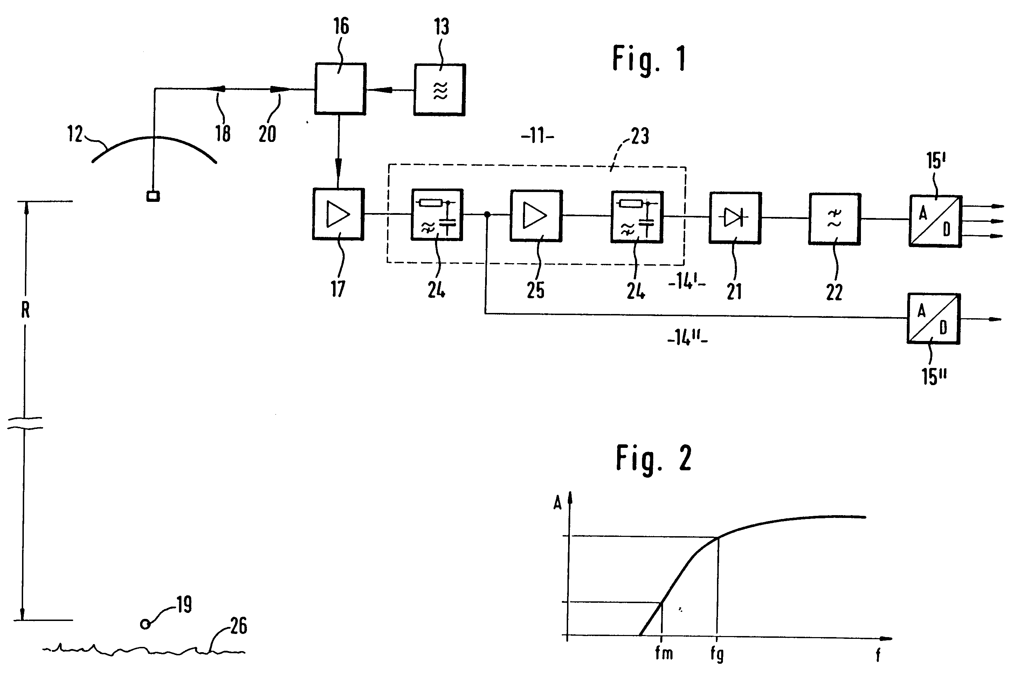

Diese Problematik großen Amplitudenhubes des Empfangssignales 20 aufgrund einer Entfernungsabhängigkeit in der vierten Potenz läßt sich jedoch dadurch beherrschen, daß die gleichzurichtende bzw. zu quantisierende Amplitudeninformation des Empfangssignales 20 durch Einsatz eines R-Exponent-Vier-Filters kompensiert, nämlich in umgekehrte Abhängigkeit von dem Abstand R zum Punktziel 19 gebracht wird. Ein solches Filter 23 wird zweckmäßigerweise aus der Serienschaltung zweier R-Quadrat-Filter 24 realisiert, zwischen denen gegebenenfalls ein Anpassungsverstärker 25 vorgesehen ist. Man kann zeigen, daß jedes R-Quadrat-Filter 24 elektrisch als lineares Hochpaßfilter auszulegen ist, wie es besonders einfach als R-C-Hochpaß erster Ordnung realisierbar ist, das nur in seinem linearen Bereich, also im Anfangsbereich seiner Kennlinie (Fig. 2) und damit weit unterhalb der Grenzfrequenz fg, im Bereich bis zu einer Maximalfrequenz fm ausgesteuert wird. Diese R²-Filter 24 können als passive R-C-Filter, oder als aktive Filter aufgrund entsprechender Beschaltung von im Empfangskanal 14 ohnehin vorgesehenen Verstärkern 17, 25, realisiert werden.

Eine Ausbildung des R-exp-Vier-Filters 23 als Serienschaltung zweier R²-Filter 24 weist, über die unproblematische Realisierbarkeit als Hochpässe erster Ordnung hinaus, auch den Vorteil auf, zwischen beiden Hochpaß-Filtern 24 einen weiteren Empfangskanal 14˝ zur Speisung eines weiteren Quantisierers 15˝abzweigen zu können.

Dessen Ausgangssignal stellt eine lineare Information über die Leistung von reflektierter Sendeenergie 18 im zielumgebenden Clutter 26 dar. Es handelt sich um nahezu senkrechte Reflexionen an der Geländeoberfläche in der Umgebung des Punktzieles 19, deren Empfangsleistung in guter Näherung umgekehrt proportional zum Quadrat des Antennen-Clutter-Abstandes R ist. Durch Abgriff eines Clutter-Empfangskanales 14˝ zwischen den beiden Filtern 24 wird somit die Clutteramplitude über dem Abstand R konstant gehalten, um eine für die Cluttergegebenheiten charakteristische frequenzabhängige digitalisierte Ausgangsinformation erhalten zu können, ohne den Quantisierer 15˝ für extreme Eingangsschwankungen auslegen zu müssen.

## Patentansprüche

1. Radarempfänger mit einem im linearen Anfangsbereich seiner Frequenzkennlinie ausgesteuerten Hochpass-Filter (24) erster Ordnung in seinem Empfangskanal (14˝),
**dadurch gekennzeichnet,**
daß hinter dem Hochpass-Filter (24) ein weiterer Empfangskanal (14′) mit einem weiteren gleich ausgelegten und ausgesteuerten Hochpass-Filter (24) vor einem Demodulations-Gleichrichter (21) mit Tiefpass (22) abzweigt, wobei jeder der beiden Empfangskanäle (14˝, 14′) einen Quantisierer (15˝, 15′) zur Analog-Digital-Wandlung speist.

2. Radarempfänger nach Anspruch 1,
**dadurch gekennzeichnet,**
daß jedes der beiden Hochpass-Filter (24) erster Ordnung als RC-Hochpassfilter ausgelegt ist.

## Claims

1. Radar receiver with a high-pass filter (24) of the first order, modulated in the linear initial range of its frequency characteristic, in its receiving channel (14˝),
characterized in that
behind the high-pass filter (24) a further receiving channel (14′) with a further identically designed and modulated high-pass filter (24) branches off in front of a demodulation rectifier (21) with low-pass filter (22), each of the two receiving channels (14˝, 14′) feeding a digitizer (15˝, 15′) for the analog/digital conversion.

2. Radar receiver according to Claim 1,
characterized in that
each of the two high-pass filters (24) of the first order is designed as an RC high-pass filter.

## Revendications

1. Récepteur radar avec un filtre passe-haut (24), dont la zone initiale de la caractéristique en fréquence est linéaire et qui est du premier ordre dans son canal de réception (14˝), caractérisé, en ce que, en aval du filtre passe-haut (24) est dérivé un autre canal de réception (14′) ayant un filtre passe-haut (24) supplémentaire de conception et de commande identiques placé en amont d'un redresseur de démodulation (21) avec un filtre passe-bas (22), chacun des deux canaux de réception (14˝, 14′) alimentant un quantificateur (15˝, 15′) destiné à opérer une conversion analogique-numérique.

2. Récepteur radar selon la revendication 1, caractérisé en ce que chacun des deux filtres passe-haut (24) de premier ordre est conçu sous forme de filtre passe-haut a composants de type RC.
